(19) **Europäisches Patentamt**

**European Patent Office**

**Office européen des brevets**

(11) **EP 0 751 888 B1**

(12) **EUROPÄISCHE PATENTSCHRIFT**

(45) Veröffentlichungstag und Bekanntmachung des Hinweises auf die Patenterteilung:
**27.05.1998 Patentblatt 1998/22**

(21) Anmeldenummer: **95912223.5**

(22) Anmeldetag: **08.03.1995**

(51) Int. Cl.$^6$: **B60T 8/00**

(86) Internationale Anmeldenummer:
**PCT/EP95/00852**

(87) Internationale Veröffentlichungsnummer:
**WO 95/26285 (05.10.1995 Gazette 1995/42)**

(54) **SCHALTUNGSANORDNUNG ZUM AUSWERTEN DER SIGNALE EINES GIERGESCHWINDIGKEITSSENSORS**

CIRCUIT FOR PROCESSING SIGNALS FROM A YAW-RATE SENSOR

CIRCUIT D'EVALUATION DES SIGNAUX D'UN CAPTEUR DE VITESSE DE LACET

(84) Benannte Vertragsstaaten:
**DE FR GB**

(30) Priorität: **25.03.1994 DE 94104856**

(43) Veröffentlichungstag der Anmeldung:
**08.01.1997 Patentblatt 1997/02**

(73) Patentinhaber:
**SIEMENS AKTIENGESELLSCHAFT**
**80333 München (DE)**

(72) Erfinder:
• **LOHRENZ, Frank**
  **D-93048 Regensburg (DE)**
• **MENTEN, Frank**
  **D-93055 Regensburg (DE)**
• **PROBST, Gregor**
  **D-84030 Landshut (DE)**

(56) Entgegenhaltungen:
**EP-A- 0 391 047       EP-A- 0 392 165**
**DE-A- 3 731 756       DE-A- 4 209 150**
**DE-A- 4 300 844       DE-C- 4 123 235**

Anmerkung:    Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Xerox (UK) Business Services
2.16.3/3.4

**Beschreibung**

Die Erfindung betrifft eine Schaltungsanordnung nach dem Oberbegriff von Anspruch 1. Eine solche Anordnung kann z.B. in einer Gierregelung verwendet werden, mit der die Fahrstabilität eines Kraftfahrzeugs erhöht wird, z.B. bei falschen Fahrmanövern durch den Fahrer oder um einen Seitenwind zu kompensieren. Gierbewegungen sind Drehungen des Kraftfahrzeugs um seine Hochachse, d.h. um eine senkrecht zu der Fahrbahnoberfläche durch seinen Schwerpunkt verlaufende Achse.

Fahrzeugstellgrößen für eine Gierregelung können entweder ein asymmetrisches Bremsen des Fahrzeugs durch eine ausschließliche oder unterschiedlich starke Betätigung der Bremsen auf einer Seite des Kraftfahrzeugs oder eine Verstellung des Hinterachslenkwinkels bei einem Kraftfahrzeug mit Hinterradlenkung sein.

Bei einer bekannten Vorrichtung zur Regelung der Fahrzeugbewegung wird der Einfluß von destabilisierenden Kräften am Fahrzeug durch Messen eines aktuellen "Giergrades" festgestellt, ein erwünschter Giergrad ermittelt und mit dem aktuellen Giergrad verglichen, und gemäß dem Vergleichsergebnis die Bremsen betätigt, um das Fahrzeug stabil zu halten (DE 39 19 347 A1).

Ein bekanntes Verfahren gemäß EP-A-0 392 165 dient ebenfalls zur Regelung der Fahrstabilität eines Fahrzeugs, wobei Soll- und Ist- Giergeschwindigkeit verglichen werden.

Die Giergeschwindigkeit (auch als Gierrate bezeichnet) wird mit einem Gier- oder Drehgeschwindigkeitssensor (auch Gierratensensor) gemessen und in ein elektrisches Signal umgesetzt. Die Güte des verwendeten Sensors bestimmt maßgeblich die Genauigkeit der Fahrstabilitätsregelung. Wirtschaftlich in Serien produzierte Giergeschwindigkeitssensoren, die in Kraftfahrzeugen verwendet werden können, basieren zum Beispiel auf dem Prinzip der Messung des Einflusses der Corioliskraft auf eine schwingende Keramikstruktur (Fox, C.H.J.: Vibrating Cylinder Gyro - Theory of Operation and Error Analysis. University of Stuttgart Gyro Symposium, September 1988) oder auf ein stimmgabelähnliches Bauteil (JEE, September 1990, Seiten 99 bis 104).

Ein technisches Problem insbesondere kostengünstiger Sensoren liegt darin, daß die Kennlinienparameter (Steigung und Nullpunktsordinate) stark von der Temperatur abhängen und daß die Temperaturabhängigkeit selbst bei in Serie gefertigten Sensoren stark von Sensor zu Sensor streut. Dieses Problem wird durch eine in der älteren Anmeldung P 4340719 (unser Zeichen: 93 P 1828) beschriebene Schaltungsanordnung gelöst.

Die Anzahl der momentan am Markt für den automobilen Einsatz zur Verfügung stehenden Sensoren ist auf wenige begrenzt. Die Technologie steckt noch in den Kinderschuhen. Es gibt unterschiedliche Basisstrukturen für die vibrierenden Teile der Sensoren: Keramikzylinder aus gesintertem Material, Metallringe mit aufwendiger Speichenkonstruktion zur Befestigung und Stimmgabelstrukturen aus Metall. Die Basismaterialien werden durch aufgeklebte Piezokeramiken oder im Fall des Metallringes durch magnetische Anregung zum Schwingen gebracht. Die Signalauskopplung erfolgt ebenfalls über aufgeklebte Piezokeramiken oder induktiv bei den Metallringen. Die derzeit verfügbaren stehenden Sensoren sind mikromaschinell hergestellt, es gibt aber noch keine mikromaschinellen Sensoren aus Silizium, wie es sie etwa bei Beschleunigungsensoren gibt.

Von den Sensorherstellern werden zwar aufwendige mechanische Fehleranalysen der Sensorelemente durchgeführt, eine vollständige Sicherheit über die gesamte Lebensdauer des Sensor kann jedoch kein Sensorhersteller garantieren. Für den Sensor gibt es zwar die Forderung nach einer Kennlinienbegrenzung im funktionsfähigen Zustand und nach einem fest definierten Spannungsbereich im Fehlerfall, es gibt aber Sensorausfälle, die durch eine nachgeschaltete Auswerteelektronik nicht erkannt werden. Eine Steigerung der Sensorsicherheit erfordert einen hoher Aufwand, zum Beispiel in Form von elektronischen Überwachungsschaltungen für den einzelnen Sensor.

Der Erfindung liegt die Aufgabe zugrunde, den Schaltungsaufwand für die Überwachung der Sensoren zu verringern, indem die Überwachung programmgesteuert von einem Rechner durchgeführt wird, der in dem Steuergerät, das die Sensorsignale auswertet, ohnehin vorhanden ist.

Diese Aufgabe wird erfindungsgemäß durch die Schaltungsanordnung nach Anspruch 1 gelöst. Diesem Steuergerät werden die Signale mindestens eines Sensors - in den meisten Fällen mehrerer Sensoren - zugeführt, der oder die fahrzustandsabhängige Größen, wie z.B. den Lenkradwinkel, die Raddrehzahlen, die Quer- und Längsbeschleunigung usw., erfassen. Durch das Steuergerät wird aus diesen Signalen eine Referenzgiergeschwindigkeit berechnet und mit der von dem Sensor gemessenen Giergeschwindigkeit verglichen. Außerdem wird eine Plausibilitätsprüfung bezüglich des Giergeschwindigkeits-Sensorsignals durchgeführt. Liegt bei gegebener Plausibilität die Differenz der beiden Giergeschwindigkeiten über einem vorgegebenen Wert, so wird der Sensor als fehlerhaft betrachtet und ein entsprechendes Diagnosebit gesetzt.

Zweckmäßige Weiterbildungen der Erfindung sind den Unteransprüchen zu entnehmen.

Vorteil ist, daß in Abhängigkeit von der jeweiligen Fahrsituation verschiedene Algorithmen eingesetzt werden können, um die Gierrate aus unterschiedlichen fahrspezifischen Zustandsgrößen zu berechnen. Das Umschalten zwischen den Algorithmen erfolgt vorteilhafterweise mit Hilfe einer Fuzzy-Logikschaltung.

Zustandsgrößen können sowohl mit Sensoren gemessen werden, als auch aus einem in dem Steuergerät abgelegten mathematischen Fahrzeugmodell hergeleitet werden.

Ein Ausführungsbeispiel der Erfindung wird im folgenden anhand der Zeichnung erläutert. Es zeigen:

Figur 1    ein Kraftfahrzeug mit einer erfindungsgemäßen Anordnung mit einem Steuergerät, in schematischer Darstellung;

Figur 2    eine Fuzzy-Logikschaltung als Bestandteil des Steuergeräts von Figur 1 und

Figur 3    ein Ablaufdiagramm des Programms, mit dem das Steuergerät den Giergeschwindigkeitssensor überwacht.

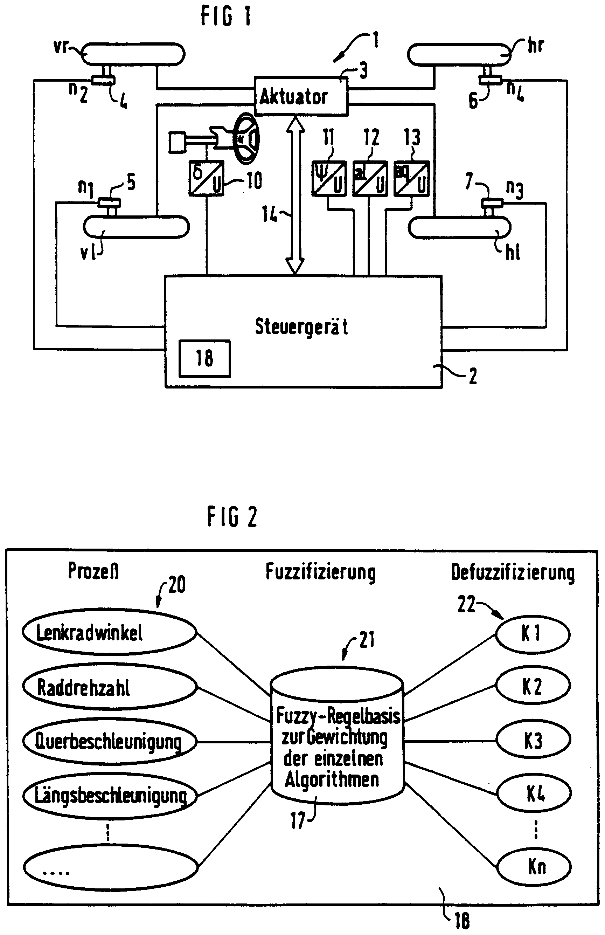

Ein Kraftfahrzeug 1 (Figur 1) enthält eine Schaltungsanordnung zum Auswerten der Signale eines Giergeschwindigkeitssensors, die Bestandteil eines Giergeschwindigkeits-Regelkreises ist. Dieser Regelkreis schließt ein elektronisches Steuergerät 2, einen Aktuator oder Aktor 3 und mehrere Sensoren ein: Vier Raddrehzahlsensoren 4 bis 7, die die Radgeschwindigkeiten des vorderen linken Rades vl, des vorderen rechten Rades vr, des hinteren linken Rades hl bzw. des hinteren rechten Rades hr messen. Außerdem ein Lenkradwinkelsensor 10, ein Giergeschwindigkeitssensor 11, ein Längsbeschleunigungssensor 12 und ein Querbeschleunigungssensor 13. Die Schaltungsanordnung kann noch weitere, hier nicht dargestellte Sensoren einschließen.

Der Aktuator 3 empfängt über eine Signalleitung oder einen Signalbus 14 Stellsignale des elektronischen Steuergeräts 2 und erzeugt daraufhin Giermomente, d.h. Drehmomente um die Hochachse des Kraftfahrzeugs 1. Dies kann z.B. durch ein unterschiedlich starkes Bremsen auf der linken und auf der rechten Fahrzeugseite oder auch durch ein Lenken der Hinterachse des Kraftfahrzeugs erfolgen. Der Aktuator 3 und die Sensoren 4 bis 13 sind als solche bekannt, sie werden hier deshalb im einzelnen nicht weiter beschrieben. Von ihnen empfängt das Steuergerät 1 folgende Sensorgrößen oder Signale:

$\delta_l$    Lenkradwinkel, Signal von Sensor 10

$\dot{\psi}$    Gierwinkelgeschwindigkeit, Signal von Sensor 11

$a_l$    Längsbeschleunigung, Signal von Sensor 12

$a_q$    Querbeschleunigung, Signal von Sensor 13

$n_l$    Raddrehzahl vorne links, Signal von Sensor 5

$n_2$    Raddrehzahl vorne rechts, Signal von Sensor 4

$n_3$    Raddrehzahl hinten links, Signal von Sensor 7

$n_4$    Raddrehzahl hinten rechts, Signal von Sensor 6

Aus den vorstehend aufgeführten Sensorsignalen kann die Gierrate des Kraftfahrzeugs auf verschiedene Weise berechnet werden, und zwar unter vorgegebenen Voraussetzungen. Nachfolgend sind Formeln A1 bis A12 (allgemeiner können es bis An Formeln sein) dargestellt. Jede von ihnen entspricht einem Algorithmus, der für einen fest definierten Wertebereich der Sensorsignale gültig ist.

$$\dot{\psi} = \frac{(v_{lh} - v_{rh})}{s_H} \qquad A1$$

$$\dot{\psi} = \frac{(v_{lv} - v_{rv})}{s_V} \qquad A2$$

$$\dot{\psi} = v_{Hi} \frac{\tan \delta_V}{l} \qquad A3$$

$$\dot{\psi} = v_{Vi} \frac{\sin \delta_V}{l} \qquad A4$$

$$\dot{\psi} = \frac{v_{Ha}}{\dfrac{l}{\tan \delta_V} + S_H} \qquad A5$$

3

$$\dot\psi = \frac{v_{Va}}{\dfrac{l}{\sin\delta_V} + S_V} \qquad A6$$

$$\dot\psi = \frac{1}{l\,i_l}\,\frac{v}{1+\dfrac{v^2}{v_{ch}^2}}\,\delta_L \qquad A7$$

$$\dot\psi = \frac{a_q}{\bar v_{vorne}} \qquad A8$$

$$\dot\psi = \frac{a_q}{\bar v_{hinten}} \qquad A9$$

$$\dot\psi = \frac{a_q}{\bar v_{kreuz\_rv\_lh}} \qquad A10$$

$$\dot\psi = \frac{a_q}{\bar v_{kreuz\_lv\_rh}} \qquad A11$$

$$\dot\psi = \sqrt{\frac{\delta_L\,a_q}{i_L\,l} + \frac{a_q^2}{v_{ch}^2}} \qquad Gl.\ 12$$

Die Variablen in den Gleichungen A1 bis A12 haben folgende Bedeutungen:

| | |
|---|---|
| $\dot\psi$ | Giergeschwindigkeit |
| $v_{lh}$ | Radgeschwindigkeit links hinten |
| $v_{rh}$ | Radgeschwindigkeit rechts hinten |
| $v_{lv}$ | Radgeschwindigkeit links vorne |
| $v_{rv}$ | Radgeschwindigkeit rechts vorne |
| $v_{Hi}$ | Radgeschwindigkeit kurveninneres Rad (hinten) |
| $v_{Vi}$ | Radgeschwindigkeit kurveninneres Rad (vorne) |
| $v_{Ha}$ | Radgeschwindigkeit kurvenäußeres Rad (hinten) |
| $v_{Va}$ | Radgeschwindigkeit kurvenäußeres Rad (vorne) |
| $\bar v_{vorne}$ | gemittelte Geschwindigkeiten Vorderachsräder |
| $\bar v_{hinten}$ | gemittelte Geschwindigkeiten Hinterachsräder |
| $\bar v_{kreuz\_rv\_lh}$ | gemittelte Geschwindigkeit (rechte Vorderradgeschwindigkeit, linke Hinterradgeschwindigkeit) |
| $\bar v_{kreuz\_lv\_rh}$ | gemittelte Geschwindigkeit (linke Vorderradgeschwindigkeit, rechte Hinterradgeschwindigkeit) |
| $v$ | Geschwindigkeit allgemein (Fahrzeuggeschwindigkeit im Schwerpunkt) |
| $v_{ch}$ | charakteristische Fahrzeuggeschwindigkeit |
| $a_q$ | Querbeschleunigung |
| $\delta_L$ | Lenkradwinkel |
| $\delta_V$ | Vorderradeinschlagwinkel (Lenkwinkel) |
| $l$ | Radstand |
| $S_V$ | Spurweite vorne |
| $S_H$ | Spurweite hinten |
| $i_L$ | Lenkübersetzung |

In einem in der Zeichnung nicht dargestellten Speicher des Steuergeräts können mehrere mathematische Fahrzeugmodelle abgelegt sein. Diese Modelle liefern aufgrund von Eingangsgrößen Zustandssignale, die die Sensorsignale in den vorstehenden Gleichungen ersetzen. Die Gültigkeitsbereiche der Sensorsignale werden im folgenden aufgeführt.

Bei einer Bestimmung der Gierrate aus dem Lenkwinkel und den Raddrehzahlen (Formeln A3 bis A6), wobei die Signale der vier Raddrehzahlensensoren 4 bis 7 verwertet werden, ergibt sich der anhand von Fahrversuchen und Fehlerabschätzungen ermittelte folgende Gültigkeitsbereich:

$$0 \leq \text{Radgeschwindigkeit} \leq 18 \text{ km/h}$$

$$0 \leq \text{Querbeschleunigung} \leq 2,8 \text{ m/s}^2$$

Bei einer Bestimmung der Gierrate durch Auswerten allein der Raddrehzahlen (Formeln A1 und A2), wobei ebenfalls die Signale der vier Raddrehzahlensensoren 4 bis 7 verwertet werden, wird der Gültigkeitsbereich durch die Forderung nach einem geringen Radschlupf und nach vorgegebenen Radschräglaufwinkeln festgelegt.

Bei einer Bestimmung der Gierrate aus einem linearen Einspurmodell (Formel A7), wobei die Signale des Lenkradwinkelsensors und eine Fahrzeugreferenzgeschwindigkeit verwertet werden, wird der Gültigkeitsbereich durch folgende Bedingungen festgelegt:

- kleiner Wankwinkel,
- kleine Schwimmwinkeländerung $\dot{\beta} = 0$,
- kleine Gierwinkelbschleunigung $\ddot{\Psi} = 0$ und
- begrenzte Querbeschleunigung $|a_q| \leq 4 m / s^2$.

Bei einer Bestimmung der Gierrate aus Signalen der Längs- und Querbeschleunigungssensoren 12, 13 mit Hilfe des linearen Einspurmodells (gemittelte Formeln A8 und A9), wobei die Fahrzeugreferenzgeschwindigkeit und die Querbeschleunigungssignale verwertet werden, wird der Gültigkeitsbereich durch folgende Bedingungen festgelegt:

- kleiner Wankwinkel,
- kleine Schwimmwinkeländerung $\dot{\beta} = 0$,
- kleine Gierwinkelbschleunigung $\ddot{\Psi} = 0$,
- Einfluß der Erdbeschleunigung auf den Beschleunigungssensor, und
- begrenzte Querbeschleunigung $|a_q| \leq 4 m / s^2$.

Bei einer Bestimmung der Gierrate aus gemittelten Raddrehzahlen und aus Signalen der Längs- und Querbeschleunigungssensoren 12, 13 mit Hilfe des linearen Einspurmodells (Formel A8 und Formel A9), wobei die Querbeschleunigungssignale und die Signale der vier Raddrehzahlensensoren 4 bis 7 verwertet werden, wird der Gültigkeitsbereich durch folgende Bedingungen festgelegt:

- kleiner Wankwinkel,
- kleine Schwimmwinkeländerung $\dot{\beta} = 0$,
- kleine Gierwinkelbschleunigung $\ddot{\Psi} = 0$,
- Fahrzeug muß sich in der Ebene bewegen, und
- begrenzte Querbeschleunigung $|a_q| \leq 4 m / s^2$.

Bei einer Bestimmung der Gierrate aus der Querbeschleunigung und dem Lenkradwinkel, wobei die Querbeschleunigungs- und die Lenkwinkel-Sensorsignale verwertet werden (Formel A12), wird der Gültigkeitsbereich ebenfalls durch folgende Bedingungen festgelegt:

- kleiner Wankwinkel,
- kleine Schwimmwinkeländerung $\dot{\beta} = 0$,
- kleine Gierwinkelbschleunigung $\ddot{\Psi} = 0$,
- Fahrzeug muß sich in der Ebene bewegen, und
- begrenzte Querbeschleunigung $|a_q| \leq 4 m / s^2$.

Die Voraussetzungen, in denen die Algorithmen der Formeln A1 bis A12 (oder An) für die Berechnung der Gierrate brauchbar sind und die Wertebereiche, für die sie gültig sind, sind in der Regelbasis 17 einer Fuzzy-Logikschaltung 18 (Figur 2) abgespeichert. Diese Regelschaltung 18 ist Bestandteil des Steuergeräts 2 (vgl. Figur 1).

Fuzzy-Logikschaltungen für sich sind bekannt. Die Logikschaltung 18 wird hier nur soweit erläutert, wie es für die Funktion der erfindungsgemäßen Überwachungsschaltung erforderlich ist. Sie weist einen Prozeßteil 20, eine Fuzzifizierung 21 und eine Defuzzifizierung 22 auf. Eingangsgrößen der Fuzzy-Logikschaltung 18 sind die den Fahrprozeß charakterisierenden Fahrzustandsgrößen: Lenkradwinkel Raddrehzahlen, Querbeschleunigung, Längsbeschleunigung usw. Sie können wie erwähnt von Sensorsignalen oder von einem gespeicherten Fahrzeugmodell stammen. In der Fuzzy-Regelbasis 17 erfolgt die Fuzzifizierung, d.h. die Umwandlung in Fuzzy-Logikgrößen, und die Auswertung mit Hilfe von dort abgelegtem Expertenwissen. Die Ausgangssignale der Fuzzy-Regelbasis 17 werden defuzzifiziert und als folgende Ausgangsgrößen von der Logikschaltung 18 ausgegeben: K1, K2, K3, K4, .......Kn. Diese Ausgangsgrößen sind Verstärkungsfaktoren, mit denen die einzelnen Additionsglieder, die das Ergebnis der Gleichungen A1 bis An darstellen, gewichtet werden.

$$\dot{\Psi}_{ref} = K1 * A1 + K2 * A2 + ... + K12 * A12 + ... + Kn * An \qquad (Gl\_13)$$

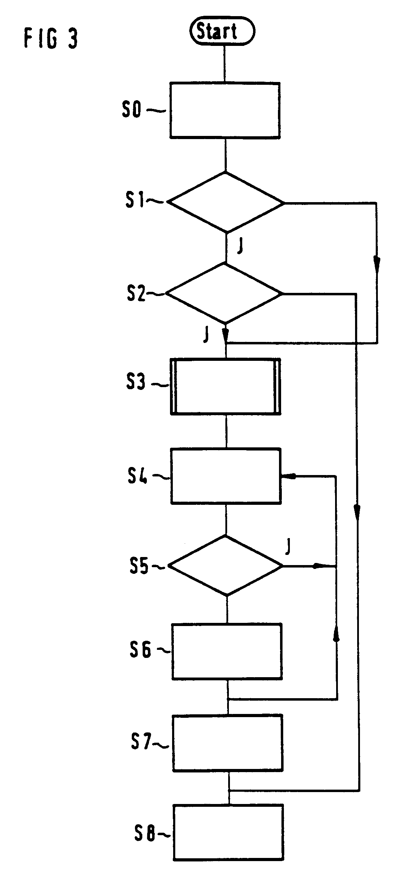

Eine Auswertung der Gierrate erfolgt innerhalb eines Zyklusses der Gierratenbestimmung, indem die Algorithmen der Gleichungen A1 bis A13 und Gl_13 so abgearbeitet werden, wie aus dem Ablaufdiagramm von Figur 3 ersichtlich ist.

Nach dem Start werden in einem Schritt S0 die Signalspannungen der verwendeten Sensoren 10 bis 13 (Lenkradwinkelsensor, Querbeschleunigungssensor, Längsbeschleunigungssensor, Gierratensensor) eingelesen und gefiltert, um zufällige Signalspannungsschwankungen auszuschalten.

In einem Schritt S1 wird aufgrund der Fahrzeugzustandsgrößen überprüft, ob eine Plausibiltitätsüberprufung durchgeführt werden kann, und zwar durch Prüfen mehrerer Plausibilitätsbedingungen. Ein Beispiel einer Plausibilitätsbedingung lautet wie folgt:

- Ist z.B. die Bedingung "Fahrzeug steht" in S1 erfüllt - kann also eine Plausibilitätsüberprüfung durchgeführt werden - , soll die gemessene Gierrate in einem fest vorgegebenen Toleranzband um die Nullage liegen.

Kann keine Plausibilitätsüberprüfung durchgeführt werden, weil die Fahrzeugzustandsgrößen außerhalb des gültigen Bereiches liegen, wird zu einem Schritt S3 verzweigt.

Kann eine Plausibilitätsüberprüfung durchgeführt werden, wird sie in dem Schritt S2 ausgeführt.

Folgende Plausibilitätsüberprüfungen sind möglich:

- Die Änderung des Lenkradwinkels ist in einem vorgegebenen Toleranzband gleich der Änderung der gemessenen Gierrate in einem vorgegebenen Toleranzband, und zwar bei konstanter Fahrzeuggeschwindigkeit ungleich null.
- Die Änderung der Querbeschleunigung ist in einem vorgegebenen Toleranzband gleich der Änderung der gemessenen Gierrate in einem vorgegebenen Toleranzband, und zwar bei konstanter Fahrzeuggeschwindigkeit.

Ist diese Plausibilitätsüberprüfung positiv ausgefallen, wird zu einem Schritt S3 verzweigt, sonst wird zu einem Schritt S8 verzweigt.

In dem Schritt S3 werden durch die Auswertung in der Fuzzy Regelbasis die zu den jeweiligen Additionstermen gehörenden Verstärkungsfaktoren (K1, ..., Kn) ermittelt.

Innerhalb einer durch Schritte S4 bis S6 gebildeten Schleife wird in dem Schritt S5 getestet, ob der jeweilige Verstärkungsfaktor (K1, ..., Kn) gleich null ist. Ist der Verstärkungsfaktor ungleich null, wird in einem nächsten Schritt S6 die dem jeweiligen Verstärkungsfaktor zugeordnete Gierrate berechnet.

In einem Schritt S7 werden die einzelnen Komponenten der Multiplikation der jeweiligen Gierrate mit dem jeweiligen Verstärkungsfaktor zur Referenzgierrate $\dot{\psi}_{ref}$ aufaddiert.

In einem Schritt S8 wird abschließend abhängig von der absoluten Differenz $\Delta\dot{\Psi} = |\dot{\Psi} - \dot{\Psi}_{ref}|$ zwischen der ermittelten Gierrate und der gemessenen Gierrate und in Abhängigkeit von dem Ergebnis der Plausibilitätsüberprüfung ein GierratensensorDiagnosebit gesetzt, das anzeigt, ob der Sensor als einwandfrei oder fehlerhaft eingestuft wird.

**Patentansprüche**

1. Schaltungsanordnung zum Auswerten der Signale eines Giergeschwindigkeitssensors (11), insbesondere für eine Fahrstabilitätsregelung in einem Kraftfahrzeug (1), mit einem Steuergerät (2),

- dem die Signale des Giergeschwindigkeitssensors (11) Zugeführt werden,
- dem die Signale mindestens eines weiteren Sensors (4 bis 13) zugeführt werden, der fahrzustandsabhängige Größen erfaßt;
- durch das aus diesen Signalen eine Referenzgiergeschwindigkeit berechnet wird, und
- durch das die Differenz zwischen dieser Referenzgiergeschwindigkeit und der von dem Giergeschwindigkeitssensor gemessenen Giergeschwindigkeit ermittelt und mit einem vorgegebenen Schwellwert verglichen wird, **dadurch gekennzeichnet**, daß in Abhängigkeit von dem Ergebnis dieses Vergleichs ein Zustandssignal abgegeben wird, das anzeigt, ob der Giergeschwindigkeitssensor (11) einwandfrei oder fehlerhaft ist.

2.  Schaltungsanordnung nach Anspruch 1, dadurch gekennzeichnet, daß durch das Steuergerät (2) überprüft wird, ob das Signal des Giergeschwindigkeitssensors (11) unter Beachtung des Fahrzustands plausibel ist, und daß der Vergleich mit dem Schwellwert abhängig von dem Ergebnis der Plausibilitätsprüfung durchgeführt wird.

3.  Schaltungsanordnung nach Anspruch 1, dadurch gekennzeichnet, daß die Referenzgiergeschwindigkeit als eine Summe mehrerer Giergeschwindigkeitswerte gebildet wird , die aus den Signalen verschiedener Sensoren berechnet werden und die Jeweils mit einem Faktor gewichtet werden.

4.  Schaltungsanordnung nach Anspruch 3, dadurch gekennzeichnet, daß die Faktoren zur Wichtung der Giergeschwindigkeitswerte durch ein Fuzzy-Logikschaltung (18) ermittelt werden.

5.  Schaltungsanordnung nach Anspruch 1, dadurch gekennzeichnet, daß die Referenzgiergeschwindigkeit nach mindestens einer der folgenden Formeln berechnet wird:

$$\dot{\psi} = \frac{(v_{lh} - v_{rh})}{s_H} \qquad \text{A1}$$

$$\dot{\psi} = \frac{(v_{lv} - v_{rv})}{s_V} \qquad \text{A2}$$

$$\dot{\psi} = v_{Hi} \frac{\tan \delta_V}{l} \qquad \text{A3}$$

$$\dot{\psi} = v_{Vi} \frac{\sin \delta_V}{l} \qquad \text{A4}$$

$$\dot{\psi} = \frac{v_{Ha}}{\dfrac{l}{\tan \delta_V} + S_H} \qquad \text{A5}$$

$$\dot{\psi} = \frac{v_{Va}}{\dfrac{l}{\sin \delta_V} + S_V} \qquad \text{A6}$$

$$\dot{\psi} = \frac{1}{l\, i_l} \frac{v}{1 + \dfrac{v^2}{v_{ch}^2}} \delta_L \qquad \text{A7}$$

$$\dot{\psi} = \frac{a_q}{\bar{v}_{vorne}} \qquad \text{A8}$$

$$\dot{\psi} = \frac{a_q}{\bar{v}_{hinten}} \qquad \text{A9}$$

$$\dot{\psi} = \frac{a_q}{\bar{v}_{kreuz\_rv\_lh}} \qquad \text{A10}$$

$$\dot{\psi} = \frac{a_q}{\bar{v}_{kreuz\_lv\_rh}} \qquad \text{A11}$$

$$\dot{\psi} = \sqrt{\frac{\delta_L\, a_q}{i_L\, l} + \frac{a_q^2}{v_{ch}^2}} \qquad \text{A12}$$

worin folgende Variablen enthalten sind:

| | |
|---|---|
| $\dot{\psi}$ | Giergeschwindigkeit |
| $v_{lh}$ | Radgeschwindigkeit links hinten |
| $v_{rh}$ | Radgeschwindigkeit rechts hinten |
| $v_{lv}$ | Radgeschwindigkeit links vorne |
| $v_{rv}$ | Radgeschwindigkeit rechts vorne |
| $v_{Hi}$ | Radgeschwindigkeit kurveninneres Rad (hinten) |
| $v_{Vi}$ | Radgeschwindigkeit kurveninneres Rad (vorne) |
| $v_{Ha}$ | Radgeschwindigkeit kurvenäußeres Rad (hinten) |
| $v_{Va}$ | Radgeschwindigkeit kurvenäußeres Rad (vorne) |
| $\bar{v}_{vorne}$ | gemittelte Geschwindigkeiten Vorderachsräder |

| $\overline{v}_{hinten}$ | gemittelte Geschwindigkeiten Hinterachsräder |
|---|---|
| $\overline{v}_{kreuz\_rv\_lh}$ | gemittelte Geschwindigkeit (rechte Vorderradgeschwindigkeit, linke Hinterradgeschwindigkeit) |
| $\overline{v}_{kreuz\_lv\_rh}$ | gemittelte Geschwindigkeit (linke Vorderradgeschwindigkeit, rechte Hinterradgeschwindigkeit) |
| $v$ | Geschwindigkeit allgemein (Fahrzeuggeschwindigkeit im Schwerpunkt) |
| $v_{ch}$ | charakteristische Fahrzeuggeschwindigkeit |
| $a_q$ | Querbeschleunigung |
| $\delta_L$ | Lenkradwinkel |
| $\delta_V$ | Vorderradeinschlagwinkel (Lenkwinkel) |
| $l$ | Radstand |
| $S_V$ | Spurweite vorne |
| $S_H$ | Spurweite hinten |
| $i_L$ | Lenkübersetzung |

## Claims

1. Circuit arrangement for evaluation of the signals from a yaw rate sensor (11), in particular for movement stability regulation in a motor vehicle (1), having a controller (2),

   - to which the signals from the yaw rate sensor (11) are supplied,
   - to which the signals from at least one further sensor (4 to 13) are supplied, which sensor detects motion state dependent variables;
   - by means of which a reference yaw rate is calculated from these signals, and
   - by means of which the difference between this reference yaw rate and the yaw rate measured by the yaw rate sensor is determined and is compared with a predetermined threshold value,

   **characterized in that** a state signal which indicates whether the yaw rate sensor (11) is serviceable or faulty is output as a function of the result of this comparison.

2. Circuit arrangement according to Claim 1, characterized in that the controller (2) checks whether the signal from the yaw rate sensor (11) is plausible taking account of the vehicle state, and in that the comparison is carried out with the threshold value, depending on the result of the plausibility check.

3. Circuit arrangement according to Claim 1, characterized in that the reference yaw rate is formed as a sum of a plurality of yaw rate values which are calculated from the signals from various sensors and are in each case weighted by a factor.

4. Circuit arrangement according to Claim 3, characterized in that the factors for weighting the yaw rate values are determined by a fuzzy logic circuit (18).

5. Circuit arrangement according to Claim 1, characterized in that the reference yaw rate is calculated using at least one of the following formulae:

$$\dot{\psi} = \frac{(v_{lh} - v_{rh})}{S_H} \qquad \text{A1}$$

$$\dot{\psi} = \frac{(v_{lv} - v_{rv})}{S_V} \qquad \text{A2}$$

$$\dot{\psi} = v_{Hi} \frac{\tan \delta_{r}}{l} \qquad \text{A3}$$

$$\dot{\psi} = v_{Vi} \frac{\sin \delta_V}{l} \qquad \text{A4}$$

$$\dot{\psi} = \frac{v_{Ha}}{\dfrac{l}{\tan \delta_V} + S_H} \qquad \text{A5}$$

$$\dot{\psi} = \frac{v_{Va}}{\dfrac{l}{\sin \delta_V} + S_V} \qquad \text{A6}$$

$$\dot{\psi} = \frac{1}{l i_l} \frac{v}{1 + \dfrac{v^2}{v_{ch}^2}} \delta_L \qquad \text{A7}$$

$$\dot{\psi} = \frac{a_q}{\bar{v}_{front}} \qquad \text{A8}$$

$$\dot{\psi} = \frac{a_q}{\bar{v}_{rear}} \qquad \text{A9}$$

$$\dot{\psi} = \frac{a_q}{\bar{v}_{cross\_rv\_lh}} \qquad \text{A10}$$

$$\dot{\psi} = \frac{a_q}{\bar{v}_{cross\_lv\_rh}} \qquad \text{A11}$$

$$\dot{\psi} = \sqrt{\frac{\delta_L a_q}{i_L l} + \frac{a_q^2}{v_{ch}^2}} \qquad \text{A12}$$

which formulae contain the following variables:

| | |
|---|---|
| $\dot{\psi}$ | Yaw rate |
| $v_{lh}$ | Wheel speed, left rear |
| $v_{rh}$ | Wheel speed, right rear |
| $v_{lv}$ | Wheel speed, left front |
| $v_{rv}$ | Wheel speed, right front |
| $v_{Hi}$ | Wheel speed, inside wheel during a turn (rear) |
| $v_{Vi}$ | Wheel speed, inside wheel during a turn (front) |
| $v_{Ha}$ | Wheel speed, outside wheel during a turn (rear) |
| $v_{Va}$ | Wheel speed, outside wheel during a turn (front) |
| $\bar{v}_{front}$ | Average speeds, front axle wheels |

| | |
|---|---|
| $\overline{v}_{rear}$ | Average speeds, rear axle wheels |
| $\overline{v}_{cross\_rv\_lh}$ | Average speed (right front wheel speed, left rear wheel speed) |
| $\overline{v}_{cross\_lv\_rh}$ | Average speed (left front wheel speed, right rear wheel speed) |
| $v$ | Speed, general (vehicle speed at the centre of gravity) |
| $v_{ch}$ | Characteristic vehicle speed |
| $a_q$ | Lateral acceleration |
| $\delta_L$ | Steering wheel angle |
| $\delta_V$ | Front wheel lock angle (steering angle) |
| $l$ | Wheelbase |
| $S_V$ | Track width, front |
| $S_H$ | Track width, rear |
| $i_L$ | Steering ratio |

## Revendications

1. Agencement de circuit pour l'analyse des signaux d'un capteur de vitesse de lacet (11), notamment pour une régulation de stabilité de conduite dans un véhicule automobile (1), comprenant un appareil de commande (2)

   - auquel sont envoyés les signaux du capteur de vitesse de lacet (11),
   - auquel sont envoyés les signaux d'au moins un autre capteur (4 à 13) qui détecte des grandeurs dépendant de l'état de conduite,
   - au moyen duquel, à partir de ces signaux, une vitesse de lacet de référence est calculée et
   - au moyen duquel la différence entre cette vitesse de lacet de référence et la vitesse de lacet mesurée par le capteur de vitesse de lacet est déterminée et comparée à une valeur de seuil préfixée,

        caractérisé en ce qu'en fonction du résultat de cette comparaison, il est délivré un signal d'état qui indique si le capteur de vitesse de lacet (11) est sans défaut ou est défectueux.

2. Agencement de circuit suivant la revendication 1, caractérisé en ce qu'au moyen de l'appareil de commande (2), il est vérifié si le signal du capteur de vitesse de lacet (11) est plausible compte tenu de l'état de conduite et en ce que la comparaison avec la valeur de seuil est exécutée en fonction du résultat du contrôle de plausibilité.

3. Agencement de circuit suivant la revendication 1, caractérisé en ce que la vitesse de lacet de référence est formée en tant que somme de plusieurs valeurs de vitesse de lacet qui sont calculées à partir des signaux de différents capteurs et qui sont pondérées chacune par un facteur.

4. Agencement de circuit suivant la revendication 3, caractérisé en ce que les facteurs servant à la pondération des valeurs de vitesse de lacet sont déterminés au moyen d'un circuit à logique floue (18).

5. Agencement de circuit suivant la revendication 1, caractérisé en ce que la vitesse de référence est calculée conformément à au moins l'une des formules suivantes :

$$\dot{\psi} = \frac{(v_{lh} - v_{rh})}{s_H} \qquad A1$$

$$\dot{\psi} = \frac{(v_{lv} - v_{rv})}{s_V} \qquad A2$$

$$\dot{\psi} = v_{Hi} \frac{\tan \delta_V}{l} \qquad A3$$

$$\dot{\psi} = v_{Vi} \frac{\sin \delta_V}{l} \qquad A4$$

$$\dot{\psi} = \frac{v_{Ha}}{\dfrac{l}{\tan \delta_V} + S_H} \qquad A5$$

$$\dot{\psi} = \frac{v_{Va}}{\dfrac{l}{\sin \delta_V} + S_V} \quad \Box \quad A6$$

$$\dot{\psi} = \frac{1}{l\, i_l} \frac{v}{1 + \dfrac{v^2}{v_{ch}^2}} \delta_L \qquad A7$$

$$\dot{\psi} = \frac{a_q}{\bar{v}_{vorne}} \qquad A8$$

$$\dot{\psi} = \frac{a_q}{\bar{v}_{hinten}} \qquad A9$$

$$\dot{\psi} = \frac{a_q}{\bar{v}_{kreuz\_rv\_lh}} \qquad A10$$

$$\dot{\psi} = \frac{a_q}{\bar{v}_{kreuz\_lv\_rh}} \qquad A11$$

$$\dot{\psi} = \sqrt{\frac{\delta_L\, a_q}{i_L\, l} + \frac{a_q^2}{v_{ch}^2}} \qquad A12$$

qui contiennent les variables suivantes :

| | |
|---|---|
| $\psi$ | vitesse de lacet |
| $v_{lh}$ | vitesse de roue arrière gauche |
| $v_{rh}$ | vitesse de roues arrière droite |
| $v_{lv}$ | vitesse de roue avant gauche |
| $v_{rv}$ | vitesse de roue avant droite |
| $v_{Hi}$ | vitesse de roue (arrière) intérieure au virage |
| $v_{Vi}$ | vitesse de roue (avant) intérieure au virage |
| $v_{Ha}$ | vitesse de roue (arrière) extérieure au virage |
| $v_{Va}$ | vitesse de roue (avant) extérieure au virage |

| | |
|---|---|
| $\bar{v}_{vorne}$ | moyenne des vitesses des roues d'essieu avant |
| $\bar{v}_{hinten}$ | moyenne des vitesses des roues d'essieu arrière |
| $\bar{v}_{kreuz\_rv\_lh}$ | moyenne de vitesse (vitesse de roue avant droite, vitesse de roues arrière gauche) |
| $\bar{v}_{kreuz\_lv\_rh}$ | moyenne de vitesse (vitesse de roue avant gauche, vitesse de roues arrière droite) |
| $v$ | vitesse en général (vitesse du véhicule au centre de gravité) |
| $v_{ch}$ | vitesse caractéristique du véhicule |
| $a_q$ | accélération transversale |
| $\delta_L$ | angle de volant de direction |
| $d_V$ | angle de braquage de roue avant (angle de braquage) |
| $l$ | empattement |
| $S_V$ | voie avant |
| $S_H$ | voie arrière |
| $i_L$ | démultiplication de direction |

## FIG 1

## FIG 2

FIG 3